# EUROPEAN PATENT APPLICATION

(11) **EP 3 372 629 A1**
(43) Date of publication of application: **12.09.2018**
(21) Application number: 16861785.0
(22) Date of filing: 02.11.2016
(51) Int. Cl.: C08J 3/20, B60C 1/00, C08C 19/25, C08K 3/06, C08K 3/36, C08K 5/31, C08K 5/405, C08K 5/44, C08K 5/47, C08K 5/54, C08L 9/06, C08L 15/00, C08L 101/00

(54) **RUBBER COMPOSITION PRODUCTION METHOD AND TIRE**

(30) Priority: 05.11.2015 JP 2015217925
(71) Applicant: Bridgestone Corporation, Tokyo 104-8340 (JP)
(72) Inventor: SAKURAI, Hideyuki, Tokyo 104-8340 (JP)
(74) Representative: Oxley, Robin John George
(86) International application number: PCT/JP2016/004804
(87) International publication number: WO 2017/077713

(57) **Abstract**

Provided are a method for producing a rubber composition capable of achieving low loss property and wet gripping performance, and a tire with loss property and wet gripping performance. The method comprises kneading of a rubber composition, wherein: the rubber composition comprises: a rubber component (A) containing 20 mass% or more of a specific modified SBR; 20 to 120 parts of a filler (C) containing silica per 100 parts of the rubber component; a compound (D); a silane coupling agent (E); and a vulcanizing agent (F), and the kneading comprises: first kneading to knead (A), (C), a part or all of (D), and 2 parts or more of (E) per 100 parts of (A); and second kneading to, after the first kneading, knead a kneaded product prepared in the first kneading and (F). The tire uses a rubber composition obtained with the method for a tread rubber.

## Description

### TECHNICAL FIELD

This disclosure relates to a method for producing a rubber composition and a tire.

### BACKGROUND

Use of silica as a filler is effective as a technique for achieving both low rolling resistance and wet gripping performance. In the case of using silica, use of a silane coupling agent together with silica is advantageous for further lowering tan*δ*.

However, in the case of using a silane coupling agent, there is a risk that unreacted components remain in the rubber, which may cause rubber burning during kneading.

Regarding such problem, for example, suggested is a method for producing a rubber composition compounding thiourea to a rubber composition containing: a rubber component (A) composed of at least one selected from natural rubber or synthetic diene based rubber; a filler containing an inorganic filler (B); and a silane coupling agent (C) (see, e.g., WO2013/099822A1 (PTL1)).

### CITATION LIST

### Patent Literature

PTL1: WO2013/099822A1

### SUMMARY

### (Technical Problem)

Thiourea is capable of improving dispersion of the filler, thereby entirely lowering the tan*δ* curve. Therefore, thiourea has excellent low hysteresis loss property (hereinafter referred to "low loss property" as well), but as a result of further study, we discovered that the wet gripping performance thereof is slightly deteriorated.

It thus would be helpful to provide a method for producing a rubber composition capable of achieving both the low loss property and the wet gripping performance. Moreover, it would be helpful to provide a tire achieving both the low loss property and the wet gripping performance.

### (Solution to Problem)

The method for producing a rubber composition according to this disclosure is a method for producing a rubber composition comprising kneading of a rubber composition, wherein: the rubber composition comprises: a rubber component (A) containing 20 mass% or more of a modified styrene-butadiene copolymer rubber (hereinafter referred to simply as "modified SBR" as well) having a glass-transition temperature (Tg) of -50°C or less; 20 to 120 parts by mass of a filler (C) containing silica per 100 parts by mass of the rubber component; at least one compound (D) selected from guanidines, sulfenamides, thiazoles, thiourea or diethylthiourea; a silane coupling agent (E); and a vulcanizing agent (F), and the kneading comprises: first kneading to knead the rubber component (A), the filler (C), a part or all of the compound (D), and 2 parts by mass or more of the silane coupling agent (E) per 100 parts by mass of the rubber component; and second kneading to, after the first kneading, knead a kneaded product prepared in the first kneading and the vulcanizing agent (F). According to the method for producing a rubber composition of this disclosure, it is possible to produce a rubber composition capable of achieving both the low loss property and the wet gripping performance.

Each glass-transition temperature (Tg) of the modified SBR and the polymers such as the second polymer in the rubber component may be measured via a temperature dispersion curve of tan*δ*, for example, measured by using a differential scanning calorimeter manufactured by TA Instruments at a sweep rate of 5°C/min to 10°C/min. In this disclosure, |Tg₁-Tg₂| refers to the absolute value of the difference of Tg₁ and Tg₂.

In this disclosure, the expression that two or more polymers are phase-separated means that the two or more polymers are insoluble to each other. In this disclosure, the phrase "phase-separated in sub-micron order" refers to different staining conditions when observing a region of 4 µm × 4 µm of the rubber composition by using FIB/SEM. In this case, these polymers may appear to the naked eye as being compatible with each other as long as they are phase-separated in sub-micron order.

An existence ratio of the filler existing in a phase of the modified SBR may be measured, for example, by measuring a smooth surface of a sample cut with microtome in a measurement range 2 µm × 2 µm, by using an atomic force microscope (AFM), e.g., MFP-3D manufactured by ASYLUM RESEARCH. For example, in the case of measuring a system in which the modified SBR and the second polymer are separated into two phases, based on a ternarized image obtained by converting with a histogram the two polymers and the filler portion of the obtained AFM image into a ternarized image, the filler areas respectively included in the phases of the two polymer components are obtained, and the ratio of the filler existing in the modified SBR is calculated from the filler total amount in the measured area. In the case where the filler is on the interface of the two polymers, the areas of the filler are divided by connecting two points where each polymer and the filler contact each other.

In this disclosure, in a domain obtained by ternarizing the image obtained with AFM and then extracting a part corresponding to the filler, a domain width (region width) of the phase of the modified SBR refers to, in the case where a domain is circular, the diameter of the circle; and refers to, in the case where a plurality of domains are amorphous such as a mottled pattern, a maximum length of the domains in a direction orthogonal to each longitudinal direction of the domains (a direction in which both ends of one domain have a maximum linear distance). The calculation is performed with the removed part compensated if the filler is added into one polymer phase, and with the same remaining removed if the filler is on the interface of the domains of the two polymers.

An average aggregate area of the filler may be obtained by, for example, obtaining an aggregate area of the filler portion with an image obtained via FIB/SEM within a measurement range of 4 µm × 4 µm, and calculating the average aggregate area of the filler portion in numerical average (arithmetic average) from the entire aggregate area and the number of aggregates of the filler portion. During the calculation, particles in contact with the edges (sides) of the image are not counted, and particles of 20 pixels or less are considered as noise and not counted.

In this disclosure, sub-micron order refers to a range of 100 nm or more and less than 1000 nm.

In this disclosure, a (co)polymer refers to a polymer or a copolymer. A (co)polymer before modification (unmodified) can refer to a base polymer. In the case where a modified functional group is, e.g., amino group, a modification ratio in a modified polymer such as modified SBR and the like may be measured according to the following method. By dissolving the modified polymer in toluene, and then precipitating in a large amount of methanol, amino group containing compounds which are not bonded to the modified polymer are separated from the rubber, and then dried. Polymers subjected to the present treatment are used as samples, to quantify their total amino group contents according to the "testing method for total amine values" according to JIS K7237. Next, the samples are subjected to quantification of their contents of secondary amino groups and tertiary amino groups according to the "acetylacetone blocked method". O-nitrotoluene is used as a solvent to dissolve the samples, added with acetylacetone, and subjected to potential-difference titration with perchloric acid acetic acid solution. The primary amino group content is obtained by subtracting the contents of secondary amino groups and tertiary amino groups from the entire amino group content, and by dividing the same with the polymer weight used in the analysis, the content of primary amino groups bonded to the polymer is obtained. Regarding the tertiary amino group content, by dissolving the polymer in toluene, and then precipitating in a large amount of methanol, amino group containing compounds which are not bonded to the modified polymer are separated from the rubber, and then dried. The polymers subjected to the present treatment are used as samples, to quantify their tertiary amino group content according to the "acetylation method". O-nitrotoluene + acetic acid is used as a solvent to dissolve the samples, added with formic acid/acetic anhydride mixed solution, and subjected to potential-difference titration with perchloric acid acetic acid solution. The content of tertiary amino groups bonded to the polymer is obtained by dividing the tertiary amino group content with the polymer weight used in the analysis.

In this disclosure, the "modified functional groups having interactivity with the filler" refer to functional groups capable of forming for example, covalent bonds or an intermolecular force (an intermolecular force such as ion-dipole interaction, dipole-dipole interaction, hydrogen bond, Van der Waals force and the like) between the modified functional groups and a surface of the filler (e.g., silica).

Each weight-average molecular weight of the polymer components may be calculated, e.g., via gel permeation chromatography (GPC) in terms of standard polystyrene.

In this disclosure, examples of a hydrolyzable group include, e.g., a trialkylsilyl group such as trimethylsilyl group, tert-butyldimethylsilyl group and the like; -O(trialkylsilyl) group; -S(trialkylsilyl) group; -COO(trialkylsilyl) group; and -N(trialkylsilyl) group.

In this disclosure, (thio)isocyanate group refers to isocyanate group or thioisocyanate group. (Thio)epoxy group refers to epoxy group or thioepoxy group. (Thio)ketone group refers to ketone group or thioketone group. (Thio)aldehyde group refers to aldehyde group or thioaldehyde group. (Thio)carboxylic acid ester group refers to carboxylic acid ester group or thiocarboxylic acid ester group.

Further, in this disclosure, "C₁ to C₂₀ monovalent aliphatic or alicyclic hydrocarbon group" refers to "C₁ to C₂₀ monovalent aliphatic hydrocarbon group or C₃ to C₂₀ monovalent alicyclic hydrocarbon group". The same goes with the case of divalent hydrocarbon group.

In this disclosure, a halogen atom refers to fluorine, chlorine, bromine or iodine.

In this disclosure, a TMS refers to a trimethylsilyl group.

### (Advantageous Effect)

According to this disclosure, it is possible to provide a method for producing a rubber composition capable of achieving both the low loss property and the wet gripping performance. Moreover, according to this disclosure, it is possible to provide a tire achieving both the low loss property and the wet gripping performance.

### DETAILED DESCRIPTION

Embodiments of this disclosure are described hereinafter. The following provides further illustration for this disclosure, which is only provided for illustration and in no way limits this disclosure.

### (Method for producing rubber composition)

The method for producing a rubber composition according to this disclosure is a method for producing a rubber composition comprising kneading of a rubber composition, wherein: the rubber composition comprises: a rubber component (A) containing 20 mass% or more of a modified SBR having a glass-transition temperature (Tg) of -50°C or less; 20 to 120 parts by mass of a filler (C) containing silica per 100 parts by mass of the rubber component; at least one compound (D) selected from guanidines, sulfenamides, thiazoles, thiourea or diethylthiourea; a silane coupling agent (E); and a vulcanizing agent (F), and the kneading comprises: first kneading, kneading the rubber component (A), the filler (C), a part or all of the compound (D), and 2 parts by mass or more of the silane coupling agent (E) per 100 parts by mass of the rubber component; and second kneading after the first kneading, kneading a kneaded product prepared in the first kneading and the vulcanizing agent (F). Thereby, it is possible to produce a rubber composition capable of achieving both the low loss property and the wet gripping performance.

### <Kneading>

The kneading includes at least the first kneading and the second kneading, and further contains third kneading between the first kneading and the second kneading as necessary. Namely, in the case of performing the third kneading, the order for performing the kneading is the first, the third and the second kneading.

### <First kneading>

In the first kneading, kneaded is a mixture containing the rubber component (A), the filler (C), a part or all of the compound (D), and 2 parts by mass or more of the silane coupling agent (E) per 100 parts by mass of the rubber component. A kneaded product (preliminary composition) is prepared in this kneading. The kneaded product (preliminary composition) prepared in the first kneading does not contain the vulcanizing agent (F).

In the kneading of the first kneading, from the viewpoint of favorably enhancing the activity of the coupling function of the silane coupling agent (E), a maximum temperature of the mixture is preferably 120°C to 190°C, more preferably 130°C to 175°C, particularly preferably 140°C to 170°C.

In the first kneading, it is preferable to first knead the rubber component (A), the filler (C) and the silane coupling agent (E), and to further add therein and knead the compound (D).

In the first kneading, it is preferable that the kneaded product contains 5 to 50 parts by mass per 100 parts by mass of the rubber component of at least one thermoplastic resin (B) selected from C₅ based resin, C₅ to C₉ based resin, C₉ based resin, terpene based resin, terpene-aromatic compound based resin, rosin based resin, dicyclopentadiene resin or alkylphenol based resin. Thereby, it is possible to achieve both the low loss property and the wet gripping performance at a high degree.

### <Second kneading>

In the second kneading after the first kneading, kneaded are the kneaded product (preliminary composition) prepared in the first kneading and the vulcanizing agent (F). A rubber composition is prepared via this kneading. In the second kneading, the compound (D) may be further added.

In the kneading of the second kneading, a maximum temperature of a mixture is preferably 60°C to 140°C, more preferably 80°C to 120°C, particularly preferably 100°C to 120°C.

When (i) proceeding from the first kneading to the second kneading, or (ii) proceeding from the third kneading described below to the second kneading, it is preferable to proceed to the second kneading after a temperature of the kneaded product (preliminary composition) is lowered by 10°C or more from a temperature directly after termination of the kneading in the first kneading or the third kneading.

### <Third kneading>

The third kneading may be further included as necessary between the first kneading and the second kneading. The third kneading further kneads the kneaded product (preliminary composition) prepared in the first kneading. The third kneading may be performed for a plurality of times. Note that in the third kneading, the vulcanizing agent (F) is not added.

In the kneading of the third kneading, from the viewpoint of favorably enhancing the activity of the coupling function of the silane coupling agent (E), a maximum temperature of the mixture is preferably 120°C to 190°C, more preferably 130°C to 175°C, particularly preferably 140°C to 170°C.

In the kneading, a kneading apparatus used in the kneading is not specifically limited, and may be appropriately selected from conventionally known kneading apparatus depending on the purpose. Examples of the kneading apparatus include: single kneading extruder; multi kneading extruder (continuous kneading apparatus); a kneading machine having a meshing or non-meshing rotor such as Banbury mixer, Intermix, kneader and the like; and roll (batch kneading apparatus). Conditions in kneading such as rotational velocity of rotor, ram pressure, kneading temperature, type of kneading apparatus and the like may be appropriately selected.

### <Rubber composition>

The rubber composition produced with the method for producing a rubber composition according to this disclosure contains: a rubber component (A) containing 20 mass% or more of a modified SBR having a glass-transition temperature (Tg) of -50°C or less; 20 to 120 parts by mass of a filler (C) containing silica per 100 parts by mass of the rubber component; at least one compound (D) selected from guanidines, sulfenamides, thiazoles, thiourea or diethylthiourea; a silane coupling agent (E); and a vulcanizing agent (F).

### <Rubber component (A)>

The rubber component (A) contained in the rubber composition contains 20 mass% or more of a modified SBR having a glass-transition temperature (Tg) of -50°C or less with respect to a total amount of the rubber component (A), and further contains other rubber components such as a second polymer as necessary.

### <Modified styrene-butadiene copolymer rubber>

By using the modified SBR, even if the compound (D) described below is used, it is possible to suppress reduction of tan*δ* at 0°C of the rubber composition, and to thereby produce a rubber composition capable of achieving both the low loss property and the wet gripping performance.

By using the modified SBR, and by preparing a masterbatch, there is prospect of an effect achieving both the low loss property and the wet gripping performance at a high degree.

A modified functional group of the modified SBR is not particularly limited, and may be appropriately selected depending on the purpose. Preferable examples of the modified functional group include modified functional groups interactive with the filler as described below. Such modified functional groups can enhance the interactivity with the filler, and to thereby achieve both the low loss property and the wet gripping performance at a high degree. A modified functional group having high interactivity with the filler (e.g., silica) is not specifically limited. Preferable examples include nitrogen containing functional groups, silicon containing functional groups and oxygen containing functional groups.

It is preferable that a base polymer of the modified SBR is a copolymer obtained by polymerizing 50 mass% to 80 mass% of 1,3-butadiene and 20 mass% to 50 mass% of styrene with respect to all monomer components of the modified SBR. Such modified SBR can achieve both the low loss property and the wet gripping performance of the rubber composition at a high degree.

A polymerization method for obtaining the base polymer is not specifically limited, and may be one conventionally known. Examples of such polymerization method include anionic polymerization, coordination polymerization and emulsion polymerization.

A modifier for obtaining the modified SBR may be appropriately selected from conventionally known modifiers. The modifier may be either a modifier reactive with polymerizable active terminals of anionic polymerization or coordination polymerization, or an amide moiety of a lithium amide compound used as a polymerization initiator. The modifier may be appropriately selected from conventionally known modifiers having the aforementioned modified functional group.

It is preferable that the modifier is a modifier having at least one atom selected from silicon atom, nitrogen atom or oxygen atom.

It is preferable that the modifier is one or more selected from the group consisting of alkoxysilane compounds, hydrocarbyloxy silane compounds and combinations thereof since the modifier has high interactivity with respect to the filler (e.g., silica).

The alkoxysilane compounds are not specifically limited, but are more preferably alkoxysilane compounds represented by the following general formula (I).

R¹ₐ-Si-(OR²)V₄₋ₐ ... (I)

In general formula (I), R¹ and R² independently represent a C₁ to C₂₀ monovalent aliphatic hydrocarbon group or a C₆ to C₁₈ monovalent aromatic hydrocarbon group, and a is an integer of 0 to 2 and in the case where OR² is plural, each OR² may be either identical to or different from each other. Moreover, the molecule does not contain active proton.

Specific examples of the alkoxysilane compound represented by the aforementioned general formula (I) include N-(1,3-dimethylbutylidene)-3-(triethoxysilyl)-1-propaneamine, tetramethoxysilane, tetraethoxysilane, tetra-n-propoxy silane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimetridimethoxysilane, methylphenyldimethoxysilane, dimethyldiethoxysilane, vinyltrimethoxysilane, vinyltriethoxysilane, and divinyldiethoxysilane. Among these, N-(1,3-dimethylbutylidene)-3-(triethoxysilyl)-1-propaneamine, tetraethoxysilane, methyltriethoxysilane and dimethyldiethoxysilane are favorable. The alkoxysilane compounds may be used alone or in a combination of two or more.

The hydrocarbyloxy silane compound is preferably a hydrocarbyloxy silane compound represented by the following general formula (II).

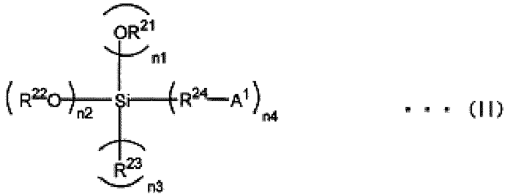

In the general formula (II), n1+n2+n3+n4=4 (where n2 is an integer of 1 to 4; n1, n3 and n4 are integers of 0 to 3); A¹ is at least one functional group selected from saturated cyclic tertiary amine compound residual group, unsaturated cyclic tertiary amine compound residual group, ketimine residual group, nitrile group, (thio)isocyanate group, (thio)epoxy group, isocyanuric acid trihydrocarbyl ester group, dihydrocarbyl carbonate ester group, nitrile group, pyridine group, (thio)ketone group, (thio)aldehyde group, amide group, (thio)carboxylic acid ester group, metallic salt of (thio)carboxylic acid ester, carboxylic anhydride residual group, carboxylic halide residual group, or primary, secondary amide group or mercapto group having hydrolyzable group, and may be either identical or different when n4 is 2 or more; A¹ may be a divalent group forming a cyclic structure by bonding with Si; R²¹ is a C₁ to C₂₀ monovalent aliphatic or alicyclic hydrocarbon group or a C₆ to C₁₈ monovalent aromatic hydrocarbon group, and may be either identical or different when n1 is 2 or more; R²³ is a C₁ to C₂₀ monovalent aliphatic or alicyclic hydrocarbon group, a C₆ to C₁₈ monovalent aromatic hydrocarbon group or a halogen atom, and may be either identical or different when n3 is 2 or more; R²² is a C₁ to C₂₀ monovalent aliphatic or alicyclic hydrocarbon group or a C₆ to C₁₈ monovalent aromatic hydrocarbon group, either one of which may contain a nitrogen atom and/or a silicon atom, and may be either identical or different, or form a ring together when n2 is 2 or more; and R²⁴ is a C₁ to C₂₀ divalent aliphatic or alicyclic hydrocarbon group, or a C₆ to C₁₈ divalent aromatic hydrocarbon group, and may be either identical or different when n4 is 2 or more.

The hydrolyzable group in the primary or secondary amino group having hydrolyzable group or the mercapto group having hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (III).

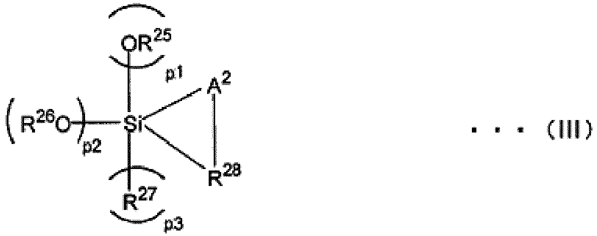

In the general formula (III), p1+p2+p3=2 (where p2 is an integer of 1 or 2, p1 and p3 are integers of 0 or 1); A² is NRa (Ra is a monovalent hydrocarbon group, hydrolyzable group or nitrogen-containing organic group) or sulfur; R²⁵ is a C₁ to C₂₀ monovalent aliphatic or alicyclic hydrocarbon group, or a C₆ to C₁₈ monovalent aromatic hydrocarbon group; R²⁷ is a C₁ to C₂₀ monovalent aliphatic or alicyclic hydrocarbon group, a C₆ to C₁₈ monovalent aromatic hydrocarbon group, or a halogen atom; R²⁶ is a C₁ to C₂₀ monovalent aliphatic or alicyclic hydrocarbon group, a C₆ to C₁₈ monovalent aromatic hydrocarbon group, or a nitrogen-containing organic group, any one of which may contain a nitrogen atom and/or a silicon atom, and may be either identical or different, or form a ring together when p2 is 2; and R²⁸ is a C₁ to C₂₀ divalent aliphatic or alicyclic hydrocarbon group or a C₆ to C₁₈ divalent aromatic hydrocarbon group. The hydrolyzable group is preferably trimethylsilyl group or tert-butyldimethylsilyl group, more preferably trimethylsilyl group.

The hydrocarbyl oxysilane compound represented by the general formula (II) is preferably a hydrocarbyl oxysilane compound represented by the following general formula (IV) or (V). Thereby, it is possible to achieve both the low loss property and the wet gripping performance at a high degree.

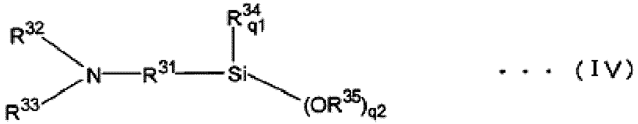

In the general formula (IV), q1+q2=3 (where q1 is an integer of 0 to 2, and q2 is an integer of 1 to 3); R³¹ is a C₁ to C₂₀ divalent aliphatic or alicyclic hydrocarbon group or a C₆ to C₁₈ divalent aromatic hydrocarbon group; R³² and R³³ are independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more.

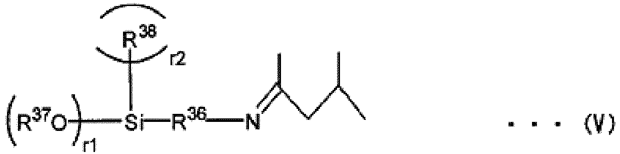

In the general formula (V), r1+r2=3 (where r1 is an integer of 1 to 3, and r2 is an integer of 0 to 2); R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

The hydrocarbyl oxysilane compound represented by the general formula (II) is preferably a hydrocarbyl oxysilane compound having two or more nitrogen atoms represented by the following general formula (VI) or (VII). Thereby, it is possible to achieve both the low loss property and the wet gripping performance at a high degree.

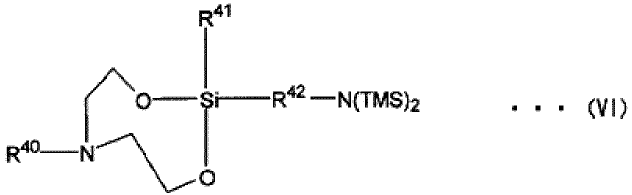

In general formula (VI), R⁴⁰ is trimethylsilyl group, a C₁ to C₂₀ monovalent aliphatic or alicyclic hydrocarbon group, or a C₆ to C₁₈ monovalent aromatic hydrocarbon group; R⁴¹ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group; and R⁴² is a C₁ to C₂₀ divalent aliphatic or alicyclic hydrocarbon group, or a C₆ to C₁₈ divalent aromatic hydrocarbon group.

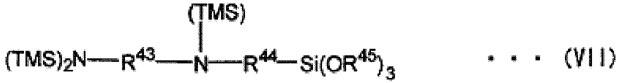

In the general formula (VII), R⁴³ and R⁴⁴ are independently a C₁ to C₂₀ divalent aliphatic or alicyclic hydrocarbon group or a C₆ to C₁₈ divalent aromatic hydrocarbon group; R⁴⁵ is a C₁ to C₂₀ monovalent aliphatic or alicyclic hydrocarbon group or a C₆ to C₁₈ monovalent aromatic hydrocarbon group, and each R⁴⁵ may be identical or different.

The hydrocarbyl oxysilane compound represented by the general formula (II) is preferably a hydrocarbyl oxysilane compound represented by the following general formula (VIII).

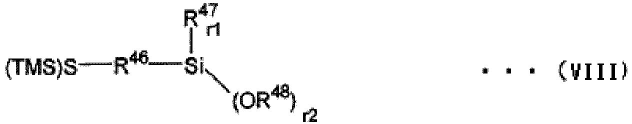

In the general formula (VIII), r1+r2=3 (where r1 is an integer of 0 to 2, and r2 is an integer of 1 to 3); R⁴⁶ is a C₁ to C₂₀ divalent aliphatic or alicyclic hydrocarbon group or a C₆ to C₁₈ divalent aromatic hydrocarbon group; R⁴⁷ and R⁴⁸ are independently a C₁ to C₂₀ monovalent aliphatic or alicyclic hydrocarbon group or a C₆ to C₁₈ monovalent aromatic hydrocarbon group. Each R⁴⁷ or R⁴⁸ may be either identical or different.

The hydrocarbyl oxysilane compound represented by the general formula (II) is preferably a hydrocarbyl oxysilane compound represented by the following general formula (IX).

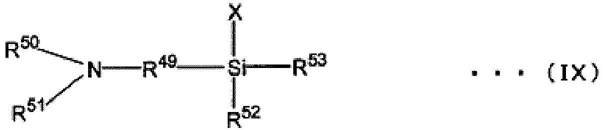

In the general formula (IX), X is a halogen atom; R⁴⁹ is a C₁ to C₂₀ divalent aliphatic or alicyclic hydrocarbon group or a C₆ to C₁₈ divalent aromatic hydrocarbon group; R⁵⁰ and R⁵¹ are independently a hydrolyzable group, a C₁ to C₂₀ monovalent aliphatic or alicyclic hydrocarbon group or a C₆ to C₁₈ monovalent aromatic hydrocarbon group, or alternatively, R⁵⁰ and R⁵¹ are bonded to form a divalent organic group; R⁵² and R⁵³ are independently a halogen atom, a hydrocarbyloxy group, a C₁ to C₂₀ monovalent aliphatic or alicyclic hydrocarbon group, or a C₆ to C₁₈ monovalent aromatic hydrocarbon group. R⁵⁰ and R⁵¹ are preferably hydrolyzable groups, and as the hydrolyzable group, trimethylsilyl group or tert-butyl dimethylsilyl group is preferable, and trimethylsilyl group is more preferable.

The hydrocarbyl oxysilane compound represented by the general formula (II) is preferably a hydrocarbyl oxysilane compound having a structure represented by the following general formulae (X) to (XIII).

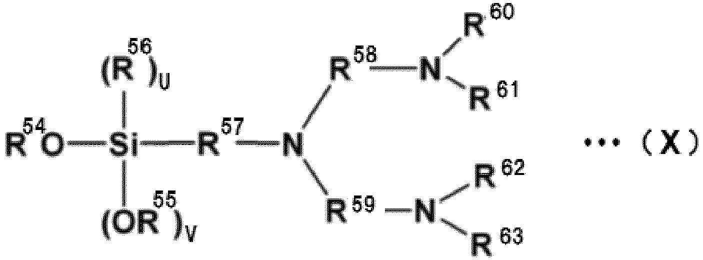

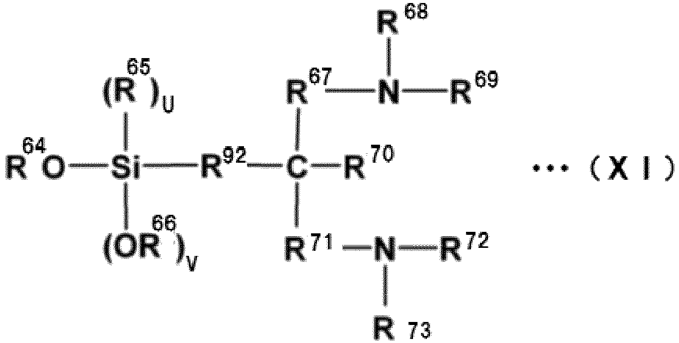

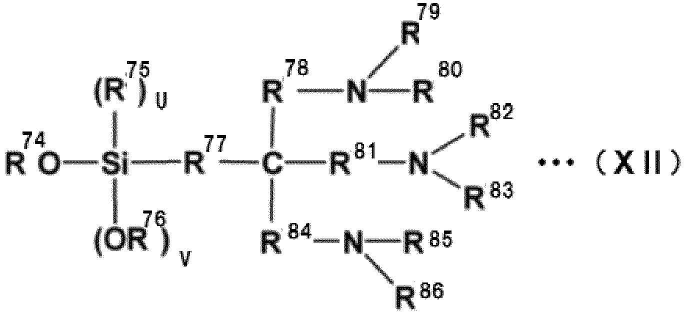

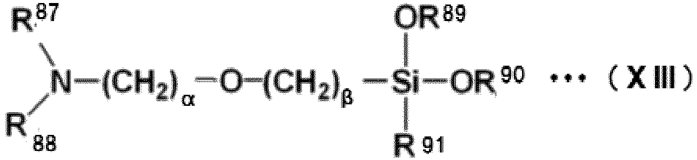

In general formulae (X) to (XIII), the signs U, V are respectively integers of 0 to 2 which satisfy U+V=2. R⁵⁴ to R⁹² in general formulae (X) to (XIII) may be either identical or different, and are C₁ to C₂₀ divalent aliphatic or alicyclic hydrocarbon group or C₆ to C₁₈ divalent aromatic hydrocarbon group. Moreover, α and β in general formula (XIII) are integers of 0 to 5.

Among compounds represented by general formulae (X) to (XII), in particular, N1,N1,N7-tetramethyl-4-((trimethoxysilyl)methyl)-1,7heptane, 2-((hexyl-dimethoxysilyl)methyl)-N1,N1,N3,N3-2-pentamethylpropane-1,3-diamine, N1-(3-(dimethylamino)propyl-N3,N3-dimethyl-N1-(3-(trimethoxysilyl)propyl)propane-1,3-diamine and 4-(3-(dimethylamino)propyl)-N1,N1,N7,N7-tetramethyl-4-((trimethoxysilyl)methyl)heptane-1,7-diamine are preferable.

Among compounds represented by general formula (XIII), in particular, N,N-dimethyl-2-(3-(dimethoxymethylsilyl)propoxy)ethaneamine, N,N-bis(trimethylsilyl)-2-(3-(trimethoxysilyl)propoxy)ethaneamine, N,N-dimethyl-2-(3-(trimethoxysilyl)propoxy)ethaneamine and N,N-dimethyl-3-(3-(trimethoxysilyl)propoxy)propane-1-amine are preferable.

The hydrocarbyloxy silane compounds represented by general formulae (II) to (XIII) are preferably used as a modifier of the modified SBR, but may be used as a modifier of the second polymer or any other rubber component as well.

The hydrocarbyl oxysilane compounds represented by general formulae (II) to (XIII) are preferably alkoxysilane compounds.

Specific examples of modifiers preferable in the case where a modified copolymer is obtained via anionic polymerization include at least one compound selected from 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone or 1-methyl-2-pyrrolidone.

The modifier is preferably an amide moiety of a lithium amide compound used as a polymerization initiator in anionic polymerization. Examples of such lithium amide compound include lithium hexamethyleneimide, lithium pyrrolizide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and combinations thereof. For example, the modifier as the amide moiety of lithium hexamethyleneimide is hexamethyleneimine, the modifier as the amide moiety of lithium pyrrolizide is pyrrolidine, and the modifier as the amide moiety of lithium piperidide is piperidine.

Preferable examples of the modifier in the case where the modified copolymer is obtained via coordination polymerization include at least one compound selected from 2-cyanopyridine or 3,4-ditrimethylsilyloxy benzaldehyde.

Preferable examples of the modifier in the case where the modified copolymer is obtained via emulsion polymerization include at least one compound selected from 3,4-ditrimethylsilyloxy benzaldehyde or 4-hexamethylene iminoalkyl styrene. These modifiers preferably used in emulsion polymerization are preferably copolymerized during emulsion polymerization as a monomer containing nitrogen atom and/or silicon atom.

The modification ratio of the modified SBR is not specifically limited and may be appropriately adjusted depending on the purpose. The modification ratio is, e.g., preferably 30% or more, more preferably 35% or more, particularly preferably 70% or more. Thereby, the filler containing silica exists selectively in the phase of the modified SBR, which achieves both the low loss property and the wet gripping performance at a high degree.

The glass-transition temperature (Tg₁) of the modified SBR is necessarily -50°C or less, preferably -60°C or less.

In the case of using the second polymer as described below, it is preferable that the glass-transition temperature Tg₁ of the modified SBR and the glass-transition temperature Tg₂ of the second polymer satisfies a relation that 0 < |Tg₁-Tg₂| ≤ 20, and the modified SBR and the second polymer are separated phases in sub-micron order. Thereby, it is possible to achieve both the low loss property and the wet gripping performance at a high degree.

In the case where the modified SBR and the second polymer are separated phases in sub-micron order, it is preferable that the average aggregate area of the filler (C) existing in the phase of the modified SBR is 2100 nm² or less. Thereby, it is possible to achieve both the low loss property and the wet gripping performance at a high degree.

An example of the modified SBR is described here. First, a copolymer of styrene and 1,3-butadiene (microstructure: 10 mass% of styrene / 40 mass% of vinyl bond amount derived from 1,3-butadiene, base molecular weight (polystyrene equivalent): 180,000) is prepared as a base polymer, and is modified with its terminals being anions by using N,N-bis(trimethylsilyl)-3-[diethoxy(methyl)silyl]propylamine, to obtain a modified SBR (modification ratio: 70%, weight-average molecular weight (Mw): 200,000).

In the case of using the second polymer, for the purpose that the relation that 0 < |Tg₁-Tg₂| ≤ 20 is satisfied and the modified SBR and the second polymer are separated phases in sub-micron order, for example, it is preferable that an SP value (SP₁) of the modified SBR and an SP value (SP₂) of the second polymer are different, satisfying 0.15 < |SP₁-SP₂|. Thereby, the modified SBR and the second polymer can be easily separated into different phases in sub-micron order.

The rubber component (A) necessarily contains 20 mass% or more of the modified SBR with respect to the total amount of the rubber component (A), and the content of the modified SBR may be appropriately adjusted depending on the purpose. It is preferable that the rubber component (A) contains 30 mass% or more of the modified SBR with respect to the total amount of the rubber component (A).

In the case where the second polymer is used and the modified SBR and the second polymer are separated phases as described above, the domain width of the phase of the modified SBR is not specifically limited, but is preferably 200 nm or less. Thereby, the wear resistance and the breaking resistance are enhanced.

### <Second polymer>

The second polymer is not specifically limited and may be appropriately selected from conventionally known rubber polymers.

The second polymer may be, e.g., a diene based copolymer. Among diene based copolymers, a copolymer of a diene-based monomer and an aromatic vinyl compound is preferable, a copolymer of 50 mass% to 80 mass% of a diene-based monomer and 20 mass% to 50 mass% of an aromatic vinyl compound with respect to all monomer components of the second polymer is more preferable.

Examples of the diene-based monomer include conjugated diene compounds such as 1,3-butadiene, isoprene, 1,3-pentadiene, 2,3-dimethylbutadiene, 2-phenyl-1,3-butadiene, 1,3-hexadiene and the like. Among these, from the viewpoint of easy adjustment of the glass-transition temperature (Tg₂) of the second polymer, 1,3-butadiene is preferable. These conjugated diene compounds may be used alone or in a combination of two or more.

Examples of the aromatic vinyl compound include styrene, α-methylstyrene, 1-vinylnaphthalene, 3-vinyltoluene, ethylvinylbenzene, divinylbenzene, 4-cyclohexylstyrene and 2,4,6-trimethylstyrene. Among these, from the viewpoint of easy adjustment of the glass-transition temperature (Tg₂) of the second polymer, styrene is preferable. These aromatic vinyl compounds may be used alone or in a combination of two or more.

Examples of the second polymer include natural rubber, isoprene rubber, styrene-butadiene copolymer rubber (SBR), butadiene rubber (BR), acrylonitrile-butadiene copolymer rubber, and chloroprene rubber.

A polymerization method for obtaining the second polymer is not specifically limited, and may be one conventionally known. Examples of such polymerization method include anionic polymerization, coordination polymerization and emulsion polymerization.

A molecular weight of the second polymer is not specifically limited. By setting the peak molecular weight to 50,000 or more, good breaking resistance and wear resistance can be obtained, and by setting the same to 700,000 or less, good processability can be obtained. Further, in order to achieve both the breaking resistance, the wear resistance and the processability at a high degree, it is preferable that a peak molecular weight is 100,000 to 350,000.

### <Other rubber components>

Other than the modified SBR and the second polymer, the rubber component (A) may further contain other rubber components different from the modified SBR and the second polymer. Examples of other rubber components include the ones mentioned in the second polymer. Polymers as other rubber components may be either unmodified (co)polymers or modified (co)polymers.

In the method for producing a rubber composition according to this disclosure, it is preferable that each of all components contained in the rubber component (A) has a glass-transition temperature of -50°C or less. Thereby, it is possible to achieve both the low loss property and the wet gripping performance at a higher degree.

### <Thermoplastic resin (B)>

The thermoplastic resin (B) is at least one selected from C₅ based resin, C₅ to C₉ based resin, C₉ based resin, terpene based resin, terpene-aromatic compound based resin, rosin based resin, dicyclopentadiene resin or alkylphenol based resin. By containing the thermoplastic resin (B) at a specific amount in the rubber composition, Tg of the rubber is raised and the loss tangent (tan*δ*) at 0°C is improved, which improves the wet gripping performance of the tire.

The thermoplastic resin (B) has high compatibility with natural rubber, and thus is advantageous in the case where natural rubber is used as the second polymer, etc. due to the high compatibility of the thermoplastic resin (B).

A compounding amount of the thermoplastic resin (B) is not specifically limited and may be appropriately adjusted. The compounding amount of the thermoplastic resin (B) is, e.g., preferably 5 to 50 parts by mass, more preferably 10 to 30 parts by mass per 100 parts by mass of the rubber component (A). By setting the compounding amount of the thermoplastic resin (B) to 5 to 50 parts by mass, it is possible to achieve both the low loss property and the wet gripping performance at a higher degree.

### <C₅ based resin>

The C₅ based resin refers to a C₅ based synthetic petroleum resin, which is a resin obtained by polymerizing a C₅ fraction using a catalyst for the Friedel-Crafts reaction, such as AlCl₃, BF₃ and the like. Specific examples thereof may include: a copolymer including, as main components, isoprene, cyclopentadiene, 1,3-pentadiene, and 1-pentene; a copolymer of 2-pentene and dicyclopentadiene; a polymer mainly composed of 1,3-pentadiene, etc.

### <C₅ to C₉ based resin>

The C₅ to C₉ based resin refers to a C₅ to C₉ based synthetic petroleum resin, which is a resin obtained by polymerizing a C₅ to C₁₁ fraction using a catalyst for the Friedel-Crafts reaction, such as AlCl₃, BF₃ and the like. Specific examples thereof may include a copolymer including, as main components, styrene, vinyltoluene, α-methylstyrene, indene, etc. Among these, a C₅ to C₉ based resin having a small amount of a component of C₉ or more is preferable from the viewpoint of excellent compatibility with the rubber component (A). Specifically, a resin having a ratio of a component of C₉ or more in the C₅ to C₉ based resin of less than 50 mass% is preferable, and a resin having a ratio of 40 mass% or less is more preferable.

### <C₉ based resin>

The C₉ based resin refers to a C₉ based synthetic petroleum resin, which is a resin obtained by polymerizing a C₉ fraction using a catalyst for the Friedel-Crafts reaction, such as AlCl₃, BF₃ and the like. Specific examples thereof may include a copolymer including, as main components, indene, methylindene, α-methylstyrene, vinyltoluene, etc.

### <Terpene based resin>

The aforementioned terpene-based resin is a solid-state resin obtained by compounding turpentine to be obtained simultaneously in obtaining rosin from trees of Pinus, or a polymerizable component separated from the turpentine, and by polymerizing the turpentine or the polymerizable component using a catalyst for the Friedel-Crafts reaction. Examples of the terpene-based resin may include: β-pinene resins; and α-pinene resins.

### <Terpene-aromatic compound based resin>

The terpene-aromatic compound based resin may be obtained through various methods including: causing terpenoids and various phenols to react with each other using a catalyst for the Friedel-Crafts reaction, or further condensing the resultant with formalin. Examples include terpene-phenol resin. Among terpene-phenol resins, a terpene-phenol resin containing less than 50 mass% of a phenol component in the resin is preferable, and a resin containing 40 mass% or less is more preferable. Terpenoids for use as the material are not specifically limited and may be appropriately selected depending on the purpose. Examples include. Examples include a monoterpene hydrocarbon such as α-pinenes and limonenes. Among these, terpenoids including α-pinenes are preferable, and α-pienes are particularly preferable.

### <Rosin based resin>

The rosin based resin is not particularly limited, and may be appropriately selected depending on the purpose. The rosin based resin include: natural resin rosins such as gum rosin, tall oil rosin and wood rosin contained in raw rosin or tall oil; modified rosin; and rosin derivative. Examples of modified rosin derivative include: polymerized rosin, partially hydrogenated rosin thereof; glycerin ester rosin, partially hydrogenated rosin and completely hydrogenated rosin thereof; pentaerythritol ester rosin, partially hydrogenated rosin and polymerized rosin thereof, etc.

### <Dicyclopentadiene resin>

The dicyclopentadiene resin may be obtained by polymerizing dicyclopentadiene using a catalyst for the Friedel-Crafts reaction, such as AlCl₃, BF₃ and the like. Specific examples include "Quinton 1920" (manufactured by Zeon Corporation), "Quinton 1105" (manufactured by Zeon Corporation), and "Marcarez M-890A" (manufactured by Maruzen Petrochemical Co., Ltd.).

### <Alkylphenol based resin>

The alkylphenol based resin is not particularly limited, and may be appropriately selected depending on the purpose. Examples of the alkylphenol based resin include alkylphenol-acetylene resin such as p-tert-butylphenol-acetylene resin and alkylphenol-formaldehyde resin with a low degree of polymerization.

### <Filler (C)>

In this disclosure the filler (C) contains at least silica, and further contains components such as carbon black, aluminum oxide, clay, alumina, talc, mica, kaolin, glass balloon, glass beads, calcium carbonate, magnesium carbonate, magnesium hydroxide, calcium carbonate, magnesium oxide, titanium oxide, potassium titanate, barium sulfate and the like as necessary. By containing silica in the filler (C), it is possible to apply reinforcement performance and low loss property.

A compounding amount of the filler (C) is not specifically limited and may be appropriately adjusted depending on the purpose, as long being 20 to 120 parts by mass per 100 parts by mass of the rubber component (A). By setting the compounding amount of the filler (C) to 20 to 120 parts by mass, it is possible to exhibit the reinforcing effect of the rubber component without deteriorating its properties such as the flexibility. It is preferable that the compounding amount of the filler (C) is 50 to 100 parts by mass per 100 parts by mass of the rubber component (A). This range is advantageous for maintaining the flexibility of the rubber component in addition to the low loss property and the wet gripping performance.

### <Silica>

The silica contained in the filler (C) is not particularly limited, and may be appropriately selected depending on the purpose. Examples of the silica include wet silica (hydrous silicate), dry silica (anhydrous silicic acid), calcium silicate, aluminum silicate, and the like. These may be used alone or in a combination of two or more. Among these, wet silica is advantageous from the viewpoint of improving the wet gripping performance.

A compounding amount of the silica may be appropriately adjusted as long as within the compounding amount of the filler (C). The compounding amount of the silica is preferably 50 mass% to 100 mass%, more preferably 80 mass% to 100 mass%, particularly 90 mass% to 100 mass% of an entire amount of the filler (C). In the filler (C), it is preferable that the silica is 90 mass% or more with respect to a total amount of the carbon black and the silica.

### <Compound (D)>

The compound (D) is at least one compound selected from guanidines, sulfenamides, thiazoles, thiourea or diethylthiourea.

A compounding amount of the compound (D) is not specifically limited and may be appropriately adjusted depending on the purpose. It is preferable that a compounding amount of the compound (D) is 0.1 to 20 parts by mass per 100 parts by mass of the rubber component (A). This range enables appropriate vulcanization.

### <Guanidines>

Use of guanidines as the compound (D) is advantageous from the viewpoint of enhancing the activity of the silane coupling agent (E). The guanidines are not particularly limited, and may be appropriately selected depending on the purpose. Examples of the guanidines include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. These may be used alone or in a combination of two or more. Among these, from the viewpoint of higher reactivity, 1,3-diphenylguanidine, 1,3-di-o-tolylguanidine and 1-o-tolylbiguanide are preferable, and 1,3-diphenylguanidine is more preferable.

### <Sulfenamides>

Use of sulfenamides as the compound (D) is advantageous from the viewpoint of enhancing the activity of the silane coupling agent (E). The sulfenamides are not specifically limited and may be appropriately selected depending on the purpose. Examples of the sulfenamides include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, and N,N-distearyl-2-benzothiazolylsulfenamide. These may be used alone or in a combination of two or more. Among these, from the viewpoint of higher reactivity, N-cyclohexyl-2-benzothiazolylsulfenamide and N-tert-butyl-2-benzothiazolylsulfenamide are preferable.

### <Thiazoles>

Use of thiazoles as the compound (D) is advantageous from the viewpoint of enhancing the activity of the silane coupling agent (E). The thiazoles are not particularly limited, and may be appropriately selected depending on the purpose. Examples of the thiazoles include 2-mercaptobenzothiazole, di-2-benzothiazolyldisulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, 6-amino-2-mercaptobenzothiazole, etc. These may be used alone or in a combination of two or more. Among these, from the viewpoint of higher reactivity, 2-mercaptobenzothiazole and di-2-benzothiazolyldisulfide are preferable.

### <Thiourea>

Thiourea is a compound represented by NH₂CSNH₂. Use of thiourea as the compound (D) is advantageous from the viewpoint of enhancing the dispersibility of the filler (C).

### <Diethylthiourea>

Diethylthiourea is a compound represented by C₂H₅NHCSNHC₂H₅. Use of diethylthiourea as the compound (D) is advantageous from the viewpoint of enhancing the dispersibility of the filler (C).

### <Silane coupling agent (E)>

The silane coupling agent (E) is not specifically limited and may be appropriately selected depending on the purpose. Examples of the silane coupling agent (E) include a compound represented by the following general formula (E1) and a compound represented by the following general formula (E2). The silane coupling agents (E) may be used alone or in a combination of two or more. By using the silane coupling agent (E), it is possible to obtain a pneumatic tire having better operability during rubber processing and better wear resistance.

(R¹⁰¹O)₃₋ₚ(R¹⁰²)ₚSi-R¹⁰³-Sₐ-R¹⁰³-Si(OR¹⁰¹)₃₋ᵣ(R¹⁰²)ᵣ ... (E1)

(In general formula (E1), R¹⁰¹ may be either identical or different ones when being plural, each being a C₁ to C₈ straight, cyclic or branched alkyl group, a C₂ to C₈ straight or branched alkoxyalkyl group, or a hydrogen atom; R¹⁰² may be either identical or different ones when being plural, each being a C₁ to C₈ straight, cyclic or branched alkyl group; and R¹⁰³ may be either identical or different ones when being plural, each being a C₁ to C₈ straight or branched alkylene group. a is 2 to 6 as an average value, and p and r may be either identical or different to each other, each being 0 to 3 as an average value. However, p and r cannot be both 3.)

(R¹⁰⁴O)₃₋ₛ(R¹⁰⁵)ₛ(Si-R¹⁰⁶-Sₖ-R¹⁰⁷-Sₖ-R¹⁰⁶-Si(OR¹⁰⁴)₃₋ₜ(R¹⁰⁵)ₜ ... (E2)

(In general formula (E2), R¹⁰⁴ may be either identical or different ones when being plural, each being a C₁ to C₈ straight, cyclic or branched alkyl group, a C₂ to C₈ straight or branched alkoxyalkyl group, or a hydrogen atom; R¹⁰⁵ may be either identical or different ones when being plural, each being a C₁ to C₈ straight, cyclic or branched alkyl group; and R¹⁰⁶ may be either identical or different ones when being plural, each being a C₁ to C₈ straight or branched alkylene group. R¹⁰⁷ is a divalent group selected from the group consisting of general formulae (-S-R¹⁰⁸-S-), (-R¹⁰⁹-Sₘ₁-R¹¹⁰-) and (-R¹¹¹-Sₘ₂-R¹¹²-Sₘ₃-R¹¹³-) (each of R¹⁰⁸ to R¹¹³ is a C₁ to C₂₀ divalent hydrocarbon group, divalent aromatic group or divalent organic group containing a hetero atom other than sulfur and oxygen; m1, m2 and m3 may be either identical or different to each other, each being 1 or more and less than 4 as an average value); the plurality of k may be either identical or different ones, each being 1 to 6 as an average value; and each of s and t is 0 to 3 as an average value. However, s and t cannot be both 3.)

Examples of the compound of general formula (E1) include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, and bis(2-monoethoxydimethylsilylethyl)disulfide.

Examples of the compound of general formula (E2) include: average composition formula

(CH₃CH₂O)₃Si-(CH₂)₃-S₂-(CH₂)₆-S₂-(CH₂)₃-Si(OCH₂CH₃)₃,

average composition formula

(CH₃CH₂O)₃Si-(CH₂)₃-S₂-(CH₂)₁₀-S₂-(CH₂)₃-Si(OCH₂CH₃)₃,

average composition formula

(CH₃CH₂O)₃Si-(CH₂)₃-S₃-(CH₂)₆-S₃-(CH₂)₃-Si(OCH₂CH₃)₃,

average composition formula

(CH₃CH₂O)₃Si-(CH₂)₃-S₄-(CH₂)₆-S₄-(CH₂)₃-Si(OCH₂CH₃)₃,

average composition formula

(CH₃CH₂O)₃Si-(CH₂)₃-S-(CH₂)₆-S₂-(CH₂)₆-S-(CH₂)₃-Si(OCH₂CH₃)₃,

average composition formula

(CH₃CH₂O)₃Si-(CH₂)₃-S-(CH₂)₆-S_{2.5}-(CH₂)₆-S-(CH₂)₃-Si(OCH₂CH₃)₃,

average composition formula

(CH₃CH₂O)₃Si-(CH₂)₃-S-(CH₂)₆-S₃-(CH₂)₆-S-(CH₂)₃-Si(OCH₂CH₃)₃,

average composition formula

(CH₃CH₂O)₃Si-(CH₂)₃-S-(CH₂)₆-S₄-(CH₂)₆-S-(CH₂)₃-Si(OCH₂CH₃)₃,

average composition formula

(CH₃CH₂O)₃Si-(CH₂)₃-S-(CH₂)₁₀-S₂-(CH₂)₁₀-S-(CH₂)₃-Si(OCH₂CH₃)₃,

average composition formula

(CH₃CH₂O)₃Si-(CH₂)₃-S₄-(CH₂)₆-S₄-(CH₂)₆-S₄-(CH₂)₃-Si(OCH₂CH₃)₃,

average composition formula

(CH₃CH₂O)₃Si-(CH₂)₃-S₂-(CH₂)₆-S₂-(CH₂)₆-S₂-(CH₂)₃-Si(OCH₂CH₃)₃,

and average composition formula

(CH₃CH₂O)₃Si-(CH₂)₃-S-(CH₂)₆-S₂-(CH₂)₆-S₂-(CH₂)₆-S-(CH₂)₃-Si(OCH₂CH₃)₃.

A compounding amount of the silane coupling agent (E) is not specifically limited and may be appropriately adjusted depending on the purpose, as long being 2 parts by mass or more per 100 parts by mass of the rubber component (A). The compounding amount of the silane coupling agent (E) is preferably 2 to 20 parts by mass, more preferably 4 to 12 parts by mass per 100 parts by mass of the rubber component(A). This range is advantageous for improving the reactivity with silica.

A ratio of the compounding amount (mass) of the silane coupling agent (E) to the compounding amount (mass) of the filler (C) (the compounding amount of the silane coupling agent (E) / the compounding amount of the filler (C)) is not specifically limited and may be appropriately adjusted depending on the purpose. The compounding amount of the silane coupling agent (E) / the compounding amount of the filler (C) is preferably 0.01 to 0.20, more preferably 0.03 to 0.20, particularly preferably 0.04 to 0.10. This range is capable of reducing the production cost of the rubber composition while improving the low loss property.

### <Vulcanizing agent (F)>

The vulcanizing agent (F) is not particularly limited, and may be appropriately selected from conventionally known vulcanizing agents depending on the purpose. Examples of the vulcanizing agent (F) include sulfur.

A compounding amount of the vulcanizing agent (F) is not specifically limited and may be appropriately adjusted depending on the purpose. A compounding amount of the vulcanizing agent (F) is preferably 0.1 to 2.0 parts by mass, more preferably 1.0 to 2.0 parts by mass, particularly preferably 1.2 to 1.8 parts by mass per 100 parts by mass of the rubber component (A).

### <Other components>

Other than the aforementioned components, other components contained in the rubber composition may be appropriately selected and compounded from compounding ingredients generally used in the rubber industry, e.g., an anti-aging agent, a vulcanization accelerator aid, an organic acid compound, etc. Commercially available products may be suitably used as these compounding ingredients.

### (Tire)

The tire according to this disclosure uses the rubber composition obtained via the aforementioned production method to the tread rubber. The tire of this disclosure is a tire capable of achieving both the low loss property and the wet gripping performance.

The production method according to this disclosure tire is not specifically limited and may be a conventionally known method for producing a tire, as long as using the rubber composition obtained with the aforementioned production method to the tread rubber. For example, the method may be: shaping a green tire using the rubber composition obtained via the aforementioned production method to the tread rubber, and vulcanizing this green tire.

### EXAMPLES

In the following, the present disclosure is described in detail with reference to Examples. However, the present disclosure is no way limited to Examples in below.

Details of the materials used in the examples is as follows.

### (Rubber component A)

Second polymer: natural rubber (NR), RSS#3, Tg₂ = -73°C
Modifier: N,N-bis(trimethylsilyl)-3-[diethoxy(methyl)silyl]propylamine, corresponding to the hydrocarbyloxy silane compound of general formula (IV)

### (Thermoplastic resin B)

C₉ based resin: trade name "Nisseki Neopolymer 140", manufactured by JX Nippon Oil & Energy Corporation
Dicyclopentadiene resin (DCPD): trade name "Quinton 1105", manufactured by Zeon Corporation
C₅ to C₉ based resin: trade name "ECR213", manufactured by ExxonMobil Chemical Company
C₅ based resin: trade name "Escorez" (Escorez is a registered trademark in Japan, other countries, or both) 1102B, manufactured by ExxonMobil Chemical Company

### (Filler C)

Silica: trade name "NipSil AQ", manufactured by Tosoh Silica Corporation

### (Compound D)

Guanidine: 1,3- diphenylguanidine (DPG), trade name "Sanceler D", manufactured by Sanshin Chemical Industry Co., Ltd.
Sulfenamide: N-(tert-butyl)-2-benzothiazole sulfenamide, trade name "Sanceler NS-G", manufactured by Sanshin Chemical Industry Co., Ltd.
Thiazole: di-2-benzothiazolyl disulfide, trade name "NOCCELER DM", manufactured by Ouchi Shinko Chemical Industrial Co., Ltd.

### (Silane coupling agent E)

Silane coupling agent: bis(3-triethoxysilylpropyl) disulfide, trade name "Si75", manufactured by Evonik Degussa Corporation

### (Preparation of modified SBR)

A cyclohexane solution of 1,3-butadiene and a cyclohexane solution of styrene were charged in a dry, nitrogen-purged pressure-resistant glass vessel (800 mL), such that 1,3-butadiene monomer was 67.5 g and styrene was 7.5 g; 0.6 mmol of 2,2-di(tetrahydrofuryl)propane and 0.8 mmol of n-butyllithium were added thereto; then polymerization was performed at 50°C for 1.5 hours. With respect to the polymerization reaction system of which the polymerization conversion rate was approximately 100% at this time, 0.72 mmol of the modifier was added, and modification reaction was performed at 50°C for 30 minutes. Afterward, 2 mL of 5 mass% 2,6-di-t-butyl-p-cresol (BHT) in isopropanol was added to terminate the reaction, and the modified SBR was obtained by drying with an ordinary method. As a result of measuring the microstructure of the obtained modified SBR, the bound styrene content was 10 mass%, the vinyl content of the butadiene moiety was 40%, and the peak molecular weight was 200,000.

### (Preparation of comparative unmodified SBR)

An unmodified modified SBR was obtained by performing a polymerization reaction similarly as the modified SBR, except that the polymerization reaction was performed without performing the modification reaction. As a result of measuring the microstructure of the obtained unmodified SBR, the bound styrene content was 10 mass%, the vinyl content of the butadiene moiety was 40%, and the peak molecular weight was 200,000.

### (Examples 1 to 13 and Comparative Examples 1 and 2)

Each rubber composition was prepared via the formulations and kneading methods as indicated in Table 1. Each maximum temperature of the mixture during the first kneading was adjusted to 150°C. The second kneading was performed after the first kneading. The kneading was performed by using a Banbury mixer.

**[Table 1]**

| | | Component | | Comparative Example 1 | Comparative Example 2 | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|---|---|
| | First kneading | Rubber component (A) | Modified SBR (Tg1=-70°C) | - | - | 100 | 60 | 30 | 30 | 30 | 30 | 30 | 30 | 30 | 30 | 30 | 30 | 30 |
| | | | Unmodified SBR (Tg1=-70°C) | 100 | 100 | - | - | - | - | - | - | - | - | - | - | - | - | - |
| | | | NR (second polymer) (Tg2= -73°C) | - | - | - | 40 | 70 | 70 | 70 | 70 | 70 | 70 | 70 | 70 | 70 | 70 | 70 |
| | | Filler (C) | Silica | 55 | 55 | 55 | 55 | 55 | 55 | 55 | 55 | 55 | 55 | 55 | 55 | 55 | 55 | 55 |
| | | Compound (D) | Thiourea | - | 0.6 | 0.6 | 0.6 | 0.6 | 0.6 | 0.6 | - | - | - | - | 0.6 | 0.6 | 0.6 | 0.6 |
| | | | Diethyhhiourea | - | - | - | - | - | - | - | 0.6 | - | - | - | - | - | - | - |
| | | | DPG | - | - | - | - | - | - | - | - | 0.6 | - | - | - | - | - | - |
| Formulation (parts by mass) | | | Sulfenamide | - | - | - | - | - | - | - | - | - | 0.6 | - | - | - | - | - |
| | | | Thiazole | - | - | - | - | - | - | - | - | - | - | 0.6 | - | - | - | - |
| | | Silane coupling agent (E) | | 5 | 5 | 5 | 5 | 5 | 5 | 5 | 5 | 5 | 5 | 5 | 5 | 5 | 5 | 5 |
| | Second kneading | Thermoplastic resin (B) | C₉ based resin | - | - | - | - | - | 10 | 15 | 15 | 15 | 15 | 15 | 20 | - | - | - |
| | | | DCPD resin | - | - | - | - | - | - | - | - | - | - | - | - | 15 | - | - |
| | | | C₅ to C₉ based resin | - | - | - | - | - | - | - | - | - | - | - | - | - | 15 | - |
| | | | C₅ based resin | - | - | - | - | - | - | - | - | - | - | - | - | - | - | 15 |
| | | Compound (D) | Thiourea | - | - | - | - | - | - | - | - | - | - | - | - | - | - | - |
| | | | Diethyhhiourea | - | - | - | - | - | - | - | - | - | - | - | - | - | - | - |
| | | | DPG | 1.6 | 1.6 | 1.6 | 1.6 | 1.6 | 1.6 | 1.6 | 1.6 | 1 | 1 | 1.6 | 1.6 | 1.6 | 1.6 | 1.6 |
| | | | Sulfenamide | 0.6 | 0.6 | 0.6 | 0.6 | 0.6 | 0.6 | 0.6 | 0.6 | 0.6 | - | 0.6 | 0.6 | 0.6 | 0.6 | 0.6 |
| | | | Thiazole | 1 | 1 | 1 | 1 | 1 | 1 | 1 | 1 | 1 | 1 | 0.4 | 1 | 1 | 1 | 1 |
| | | Vulcanizing agent (F) | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Morphology | | Domain width (nm) | | - | - | - | 150 | 150 | 150 | 150 | 150 | 150 | 150 | 150 | 150 | 150 | 150 | 150 |
| | | Average aggregate area (nm²) | | - | - | - | 1700 | 1400 | 1400 | 1400 | 1400 | 1400 | 1400 | 1400 | 1400 | 1400 | 1400 | 1400 |
| Performance evaluation | | Low loss property (index) | | 100 | 103 | 115 | 113 | 112 | 110 | 109 | 109 | 109 | 109 | 109 | 108 | 109 | 110 | 111 |
| | | Wet gripping performance (index) | | 100 | 99 | 100 | 100 | 100 | 105 | 107 | 107 | 107 | 107 | 107 | 110 | 108 | 111 | 111 |

Each obtained rubber composition was evaluated the following (1) and (2) according to the methods described below. (1) and (2) were measured according to the methods described below. The evaluation results were as indicated in Table 1.
(1) Low loss property (tan*δ*)
(2) Wet gripping performance

### <Performance evaluation>

### (1) Low loss property (60°C tanδ index)

Each rubber composition was measured of the loss tangent (tan*δ*) by using a viscoelasticity measurement apparatus (made by Rheometrics Inc.) at the conditions of temperature: 50°C, strain: 5% and frequency: 15 Hz. Each obtained value of tan*δ* was indexed, with the value of Comparative Example 1 as 100. A larger index value indicates better low loss property.

### (2) Wet gripping performance

The obtained rubber composition was vulcanized at 145°C for 33 minutes, and a vulcanized rubber obtained thereby was measured of a resistance value of a specimen (vulcanized rubber) with respect to a wet concrete road surface by using a British Portable Skid Tester. The results thereof were indexed, with the value of Comparative Example 1 as 100. A larger value indicates better wet gripping performance.

As compared to Comparative Example 1, Comparative Example 2, which had thiourea (compound (D)) kneaded in the first kneading, had slightly worse wet gripping performance. On the other hand, Example 1, which used modified SBR, achieved both the low loss property and the wet gripping performance. Further, Examples 4 to 13, which had the thermoplastic resin (B) kneaded in the second kneading, achieved both the low loss property and the wet gripping performance at a high degree.

### INDUSTRIAL APPLICABILITY

According to this disclosure, it is possible to provide a method for producing a rubber composition capable of achieving both the low loss property and the wet gripping performance. Moreover, according to this disclosure, it is possible to provide a tire achieving both the low loss property and the wet gripping performance.

## Claims

1. A method for producing a rubber composition comprising kneading of a rubber composition, wherein:
the rubber composition comprises:
a rubber component (A) containing 20 mass% or more of a modified styrene-butadiene copolymer rubber having a glass-transition temperature (Tg) of -50°C or less;
20 to 120 parts by mass of a filler (C) containing silica per 100 parts by mass of the rubber component;
at least one compound (D) selected from guanidines, sulfenamides, thiazoles, thiourea or diethylthiourea;
a silane coupling agent (E); and
a vulcanizing agent (F), and
the kneading comprises:
first kneading to knead the rubber component (A), the filler (C), a part or all of the compound (D), and 2 parts by mass or more of the silane coupling agent (E) per 100 parts by mass of the rubber component; and
second kneading to knead, after the first kneading, a kneaded product prepared in the first kneading and the vulcanizing agent (F).

2. The method for producing a rubber composition according to claim 1, wherein:
each of all components contained in the rubber component (A) has a glass-transition temperature of -50°C or less.

3. The method for producing a rubber composition according to claim 1 or 2, wherein:
in the first kneading, the kneaded product contains 5 to 50 parts by mass per 100 parts by mass of the rubber component of at least one thermoplastic resin (B) selected from C₅ based resin, C₅ to C₉ based resin, C₉ based resin, terpene based resin, terpene-aromatic compound based resin, rosin based resin, dicyclopentadiene resin or alkylphenol based resin.

4. The method for producing a rubber composition according to any one of claims 1 to 3, wherein:
the rubber components further contains a second polymer different from the modified styrene-butadiene copolymer rubber;
a glass-transition temperature Tg₁ of the modified styrene-butadiene copolymer rubber and a glass-transition temperature Tg₂ of the second polymer satisfy a relation that 0 < |Tg₁-Tg₂| ≤ 20; and
the modified styrene-butadiene copolymer rubber and the second polymer are phase-separated in sub-micron order.

5. The method for producing a rubber composition according to claim 4, wherein:
a domain width of a phase of the modified styrene-butadiene copolymer rubber is 200 nm or less.

6. The method for producing a rubber composition according to claim 4 or 5, wherein:
an average aggregate area of the filler (C) existing in the phase of the modified styrene-butadiene copolymer rubber is 2100 nm² or less.

7. The method for producing a rubber composition according to any one of claims 1 to 6, wherein:
the modified styrene-butadiene copolymer rubber is modified with:
a hydrocarbyl oxysilane compound represented by the following general formula (IV): 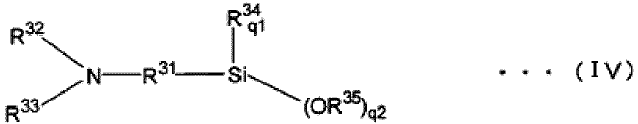 where q1+q2=3, with q1 being an integer of 0 to 2 and q2 being an integer of 1 to 3; R³¹ is a C₁ to C₂₀ divalent aliphatic or alicyclic hydrocarbon group or a C₆ to C₁₈ divalent aromatic hydrocarbon group; R³² and R³³ are independently a hydrolyzable group, a C₁ to C₂₀ monovalent aliphatic or alicyclic hydrocarbon group, or a C₆ to C₁₈ monovalent aromatic hydrocarbon group; R³⁴ is a C₁ to C₂₀ monovalent aliphatic or alicyclic hydrocarbon group or a C₆ to C₁₈ monovalent aromatic hydrocarbon group, and may be either identical or different when q1 is 2; R³⁵ is a C₁ to C₂₀ monovalent aliphatic or alicyclic hydrocarbon group, or a C₆ to C₁₈ monovalent aromatic hydrocarbon group, and may be either identical or different when q2 is 2 or more; or
a hydrocarbyl oxysilane compound represented by the following general formula (V): 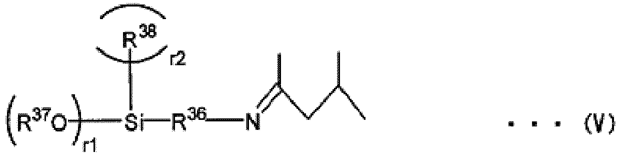 where r1+r2=3, with r1 being an integer of 1 to 3 and r2 being an integer of 0 to 2; R³⁶ is a C₁ to C₂₀ divalent aliphatic or alicyclic hydrocarbon group or a C₆ to C₁₈ divalent aromatic hydrocarbon group; R³⁷ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C₁ to C₂₀ monovalent aliphatic or alicyclic hydrocarbon group, or C₆ to C₁₈ monovalent aromatic hydrocarbon group, and may be either identical or different when r1 is 2 or more; R³⁸ is a C₁ to C₂₀ hydrocarbyloxy group, a C₁ to C₂₀ monovalent aliphatic or alicyclic hydrocarbon group, or a C₆ to C₁₈ monovalent aromatic hydrocarbon group, and may be either identical or different when r2 is 2.

8. The method for producing a rubber composition according to any one of claims 1 to 7, wherein:
the filler (C) contains silica in an amount of 50 mass% to 100 mass%.

9. The method for producing a rubber composition according to claim 8, wherein:
the filler (C) contains silica in an amount of 90 mass% or more.

10. A tire using a rubber composition obtained with the method according to any one of claims 1 to 9 for a tread rubber.
